# EUROPÄISCHE PATENTANMELDUNG

(11) **EP 2 824 299 A1**
(43) Veröffentlichungstag der Anmeldung: **14.01.2015**
(21) Anmeldenummer: 14173496.2
(22) Anmeldetag: 23.06.2014
(51) Int. Cl.: F01N 5/02, F02G 5/00

(54) **Wärmerückgewinnungssystem für einen Verbrennungsmotor**

(30) Priorität: 11.07.2013 DE 102013213581
(71) Anmelder: Mahle International GmbH, 70376 Stuttgart (DE)
(72) Erfinder: Elsässer, Alfred, 75210 Keltern (DE); Maisch, Christian, 73230 Kirchheim (DE); Müller, Rolf, 71711 Steinheim/Murr (DE); Wieske, Peter, 70825 Korntal-Münchingen (DE)
(74) Vertreter: BRP Renaud & Partner mbB Rechtsanwälte Patentanwälte Steuerberater

(57) **Zusammenfassung**

Die Erfindung betrifft ein Wärmerückgewinnungssystem (13) für einen Verbrennungsmotor (14) mit einem von einem fluidischen Wärmeträger durchströmten Wärmeübertrager (6, 11) zum Übertragen von Wärme von einer Abgasanlage (15) des Verbrennungsmotors (14) auf den Wärmeträger, einer von dem Wärmeträger durchströmten Wärmekraftmaschine (1), insbesondere einer Expansionsmaschine, zum Umwandeln der auf den Wärmeträger übertragenen Wärme in eine mechanische Abtriebsarbeit, einem im Wesentlichen zyklisch geschlossenen Leitungssystem (16) zum Verbinden des Wärmeübertragers (6, 11) mit der Wärmekraftmaschine (1) und einer Verdrängerpumpe (4) zum Fördern des Wärmeträgers durch das Leitungssystem (16) in einer vorgegebenen Strömungsrichtung (17) mittels einer mechanischen Antriebsarbeit. Eine verbesserte Abdichtung des Wärmeträgers ermöglichen ein gegenüber dem Wärmeträger hermetisierter Antrieb zum Zuführen der Antriebsarbeit an die Verdrängerpumpe (4) und ein gegenüber dem Wärmeträger hermetisierter Abtrieb zum Abführen der Abtriebsarbeit von der Wärmekraftmaschine (1).

Die Erfindung betrifft ferner einen Verbrennungsmotor (14) mit einem solchen Wärmerückgewinnungssystem (13).

## Beschreibung

Die Erfindung betrifft ein Wärmerückgewinnungssystem für einen Verbrennungsmotor gemäß dem Oberbegriff des Anspruchs 1. Die Erfindung betrifft ferner einen entsprechenden Verbrennungsmotor nach dem Oberbegriff des Anspruchs 15.

Ein Verbrennungsmotor ist eine Brennkraftmaschine, die chemische Energie eines Kraftstoffs durch Verbrennung in mechanische Arbeit umwandelt. Die Verbrennung findet dabei durch die Entzündung eines Gemischs aus Kraftstoff und Umgebungsluft in einem Brennraum statt. Die Ausdehnung des durch die Verbrennung erwärmten Verbrennungsabgases wird genutzt, um einen Kolben zu bewegen.

Aus dem Stand der Technik sind insbesondere Verbrennungsmotoren bekannt, die bis zu 40 % der im Kraftstoff gespeicherten Energie zur Bewegung des Kolbens einsetzen. Die restliche im Rahmen der Verbrennung erzeugte Energie wird - im Falle eines gekühlten Motors neben der Kühlflüssigkeit - vor allem durch entweichende Verbrennungsabgase in Form von Wärme aus dem Motor abgeleitet. Zur Reduzierung derartiger Wärmeverluste wurde daher vorgeschlagen, einen gattungsgemäßen Verbrennungsmotor um ein geeignetes Wärmerückgewinnungssystem zu ergänzen. Das Fachmagazin "lastauto omnibus 1-2/2013" erläutert auf den Seiten 30 ff. den grundlegenden Aufbau entsprechender in Fachkreisen bekannter Vorrichtungen.

Ein anderer, in "MTZ 10|2012" ab Seite 768 abgedruckter Fachartikel bedient sich dabei einer als Wärmeübertrager oder Wärmetauscher bezeichneten Vorrichtung, die - in einem dem Dampftechniker als Clausius-Rankine-Kreisprozess bekannten zyklischen Ablauf - thermische Energie vom Verbrennungsraum des Motors auf einen diesen umströmenden Wärmeträger überträgt. K. Schmiederer, J. Eitel, S. Edwards, E. Pantow, P. Geskes, R. Lutz, M. Mohr, B. Sich, R. Dreisbach, J. Wolkerstorfer, H. Theißl, S. Krapf und K. Neunteufl, "Verbrauchspotenzial eines Nutzfahrzeugmotors mit Rankine System, ermittelt über Leistungsmessungen bei Stationär- und Instationärzyklen bei konstanten Emissionen", 33. Internationales Wiener Motorensymposium, 2012, untersucht die mittels des vorgeschlagenen Ansatzes erzielbare Reduktion des Kraftstoffverbrauchs.

Problematisch ist dabei die Wahl des Wärmeträgers, der sich als solcher einerseits durch einen hohen Siedepunkt und Wärmeübergangskoeffizienten sowie hohe Wärmekapazität und -leitfähigkeit, andererseits durch niedrige Viskosität, Entzündlichkeit, Toxizität sowie einen niedrigen Gefrierpunkt auszeichnen sollte. Aus dem Stand der Technik bekannte Wärmeübertrager verwenden daher neben konventionellen Kältemitteln beispielsweise Wasser, Ethanol, Methanol, Ammoniak oder auf diesen Flüssigkeiten basierende Gemische als Wärmeträger.

So offenbart etwa US 2008/0008605 A1 eine Kraftstoffhochdruckpumpe bei dem der bewegliche Teil ein Metallbalg ist, der abwechselnd mit Hydraulikflüssigkeit unter hohem Druck gefüllt und entleert wird. Dabei wird die Menge an Kraftstoff in der Kammer, in der sich der Balg bewegt, stromaufwärts von einem Magnetventil bestimmt, das durch einen Computer zur Überwachung des Motors gesteuert wird. Die vorgeschlagene Pumpe umfasst mindestens zwei Pumpeinheiten, die durch einen einzigen, den beiden Einheiten gemeinsamen Einlass gespeist werden.

Auch FR 2 828 240 - A1 schlägt eine Hydraulikpumpe für Benzin vor. Dabei ist jeder Zylinder der Hydraulikpumpe einerseits mit einem Reservoir und andererseits mit einem Rückschlagventil verbunden, die wahlweise unter der Wirkung einer mittels eines Proportionalmagneten gesteuerten Verteilvorrichtung in Fluidverbindung treten.

DE 103 06 146 A1 beschreibt einen Niederdruckspeicher für eine Hochdruckkolbenpumpe zum Pumpen von Kraftstoff mit einer flüssigkeitsdichten elastischen Trennstruktur, die eine erste Seite und eine zweite Seite aufweist, wobei die erste Seite ein Teilvolumen des Niederdruckspeichers begrenzt, das mit einer Niederdruckseite der Hochdruckkolbenpumpe hydraulisch verbunden ist. Der Niederdruckspeicher zeichnet sich dadurch aus, dass die elastische Trennstruktur das Teilvolumen gasdicht abgrenzt.

Ein Nachteil dieser herkömmlichen Wärmerückgewinnungssysteme liegt dabei im langfristigen Verschleiß der solcherart umströmten beweglichen Teile des Wärmerückgewinnungssystems. Insofern weisen die genannten Flüssigkeiten meist physikalische Kennwerte hinsichtlich Dichte, Viskosität, Pourpoint, Anilin-, Tropfund Stockpunkt sowie Neutralisationsvermögen auf, die sie als Schmierstoff nur bedingt geeignet erscheinen lassen. Auch die chemische Verträglichkeit mit gebräuchlichen Antriebskomponenten ist bei einigen der verwendeten Wärmeträger nicht als unkritisch zu bewerten. Die tribologische Belastung des Wärmerückgewinnungssystems wird durch das zum Betrieb des Wärmeübertragers erforderliche Druckniveau des Wärmeträgers je nach Ausgestaltung tendenziell weiter verstärkt.

Aufgabe der Erfindung ist daher die Schaffung eines Wärmerückgewinnungssystems für einen Verbrennungsmotor, welches den beschriebenen Nachteil überwindet.

Gelöst wird diese Aufgabe durch ein Wärmerückgewinnungssystem mit den Merkmalen des Anspruchs 1.

Grundgedanke der Erfindung ist demnach, das Wärmerückgewinnungssystem so auszugestalten, dass dessen gegeneinander bewegliche Bauteile fluiddicht von dem Wärmeträger getrennt sind. Die somit erreichte Medientrennung ermöglicht es dem Fachmann, einen unter funktionellen Gesichtspunkten optimierten Wärmeträger zur Füllung des Wärmerückgewinnungssystems weitgehend unabhängig von der konstruktiven Beschaffenheit der Antriebskomponenten auszuwählen, ohne dass ein Kontakt zwischen Wärmeträger und Maschinenteilen mit der möglichen Folge einer chemischen Berührungsreaktion droht.

Zu diesem Zweck wird einerseits der Antrieb der zur Förderung des Wärmeträgers verwendeten Pumpe gegenüber dem Wärmeträger hermetisiert, das heißt abgedichtet und damit jegliches Austreten des Wärmeträgers durch konstruktive Maßnahmen verhindert. Andererseits wird der Abtrieb der zur Extraktion thermischer Energie eingesetzten Wärmekraftmaschine in gleicher Weise gegenüber dem Wärmeträger abgedichtet. Durch diese Modifikation der elementaren Schnittstellen zur Ein- und Ausleitung kinetischer Energie entsteht ein hermetisch geschlossenes Wärmerückgewinnungssystem.

Seitens des Pumpenantriebs lässt sich der angestrebte hermetische Verschluss etwa mittels einer aus Metall oder Kunststoff gefertigten Trennmembran herstellen. Einschlägig bekannte Metall- oder Polymerverbindungen verfügen über eine hohe Duktilität, sodass eine entsprechende Membran unter den im Pumpbetrieb auftretenden periodischen Belastungen zahlreiche elastische Verformungszyklen durchlaufen kann, ohne dass ihr Dichtegrad durch Bildung von Rissen oder anderweitiges Materialversagen merklich beeinträchtigt wird. Die Verwendung eines metallischen Werkstoffs eröffnet dem Fachmann im Rahmen der Ausgestaltung einer geeigneten Membran zudem eine Vielzahl metallurgischer Verarbeitungsverfahren.

Dabei empfiehlt sich zur Beeinflussung der physikalischen, elektrischen oder chemischen Eigenschaften des Werkstoffs das Aufbringen einer geeigneten Beschichtung, etwa mittels des Aufdampfens oder Aufsprühens eines weiteren Werkstoffes oder durch das Eintauchen der Trennmembran in ein galvanisches Bad.

In einer bevorzugten Ausführungsform bildet die Trennmembran dabei die Wandung eines Faltenbalgs. Die Nutzung eines derartigen Faltenbalgs zur Abdichtung einer Pumpe wurde grundsätzlich bereits in DE 100 35 625 A1 erörtert, wobei die zitierte Offenlegungsschrift deren Verwendung im Rahmen des Einspritzsystems eines Verbrennungsmotors vorschlägt. Die erfindungsgemäße Anwendung einer Faltenbalgpumpe zur Wärmerückgewinnung überträgt den Vorteil einer verbesserten Abdichtung des Pumpenraums in vorteilhafter Weise auf das vorliegende Szenario.

Ein solcher Pumpenantrieb kann etwa auf einem im Faltenbalg beweglich gelagerten Hubkolben beruhen, wobei innerhalb des Faltenbalgs zwischen dem Hubkolben und der Trennmembran verbleibende Hohlräume mittels einer geeigneten Hydraulikflüssigkeit ausgefüllt werden. Die beim Antrieb der Verdrängerpumpe durch den Hubkolben ausgeübte Kraft überträgt sich in diesem Fall über die Hydraulikflüssigkeit auf den Faltenbalg, dessen Ausdehnung wiederum unmittelbar den fluidischen Wärmeträger verdrängt, welcher den Faltenbalg auf der gegenüberliegenden Seite der Trennmembran umströmt. Die beschriebene hydromechanische Verbindung zwischen An- und Abtrieb gestattet dem Fachmann auf dem Gebiet der Antriebstechnik eine optimale konstruktive Anpassung des Wärmerückgewinnungssystems an übergeordnete Raumvorgaben. Gleichwohl lässt sich auf diese Weise die vergleichsweise große Förderleistung erzielen, welche der Einsatz der Verdrängerpumpe im Rahmen der Wärmerückgewinnung verlangt.

Eine der beschriebenen Abdichtung des Antriebs entsprechende Abdichtung des Abtriebs kann indes mittels einer fluiddichten Wandung der Wärmekraftmaschine realisiert werden. Das sich dabei stellende Problem der Kraftübertragung auf den Abtrieb lässt sich in dieser Anordnung mithilfe einer dem Fachmann aus anderen Zusammenhängen bekannten sogenannten berührungslosen Magnetkupplung lösen.

In einer bevorzugten Ausführungsform umfasst das Wärmerückgewinnungssystem zudem einen Ausgleichsbehälter, um dem unter Umständen variablen Massestrom des Wärmeträgers durch das Leitungssystem zu begegnen. Durch die Herstellung einer Fluidverbindung zwischen Leitungssystem und Ausgleichsbehälter kann der Flüssigkeits- oder Gasdruck zwischen beiden Räumen mittels einer solchen Anordnung im Wesentlichen ausgeglichen werden, wobei eine zusätzliche druckausgleichende Membran die genannte Wirkung potenziell noch verbessert.

Wird ein solcher Ausgleichsbehälter mit einem Füllventil versehen, so lässt sich das Wärmerückgewinnungssystem über diesen Zugang auf einfache Weise für den erstmaligen Gebrauch mit dem Wärmeträger auffüllen oder entleeren, ohne dass bei geeigneter Konfiguration des Füllventils ein Austreten des Wärmeträgers im Betrieb des Wärmerückgewinnungssystems zu befürchten wäre. Ein derartiges Füllventil stellt zudem einen sinnvollen Messpunkt zum Anbringen eines Druckaufnehmers dar, welcher im Rahmen einer Messeinrichtung, etwa im Verbund mit einem Steuergerät, zur Erfassung des Füllstands des Leitungssystems dienen kann.

Um den Massestrom in die Wärmekraftmaschine auf ein gewünschtes Maß zu begrenzen oder gänzlich zu sperren, können an geeigneten Positionen Umgehungsventile in das Leitungssystem integriert werden. Eine solche Anordnung erweist sich vor allem dann als vorteilhaft, wenn die Wärmerückgewinnung aus den Verbrennungsabgasen vorübergehend ausgesetzt werden soll, die Betriebstemperatur eines in das System eingebetteten Verdampfers sich jedoch oberhalb der Zersetzungstemperatur des verwendeten Wärmeträgers bewegt. In solch einem Fall verhindert oder verzögert die kontinuierliche Umwälzung des Wärmeträgers innerhalb des Leitungssystems in einem sogenannten Schiebebetrieb wirksam das Auftreten thermischer Zersetzungseffekte seitens des Wärmeträgers.

Die Ergänzung des Wärmerückgewinnungssystems um ein Steuergerät erlaubt schließlich die zentrale Mengenregelung und Langzeitüberwachung der Verdrängerpumpe und weiterer Systembestandteile. Weitere an das Steuergerät angeschlossene Feldgeräte können dabei auch etwaige Generatoren, Druck- oder Temperaturaufnehmer, Füllstandsmesser, Sicherheitsventile oder Umgehungsventile des Wärmerückgewinnungssystems in das Steuerkonzept mit einbeziehen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: den grundlegenden Aufbau eines Wärmerückgewinnungssystems und
- Fig. 2: den Schaltplan eines erfindungsgemäßen Wärmerückgewinnungssystems.

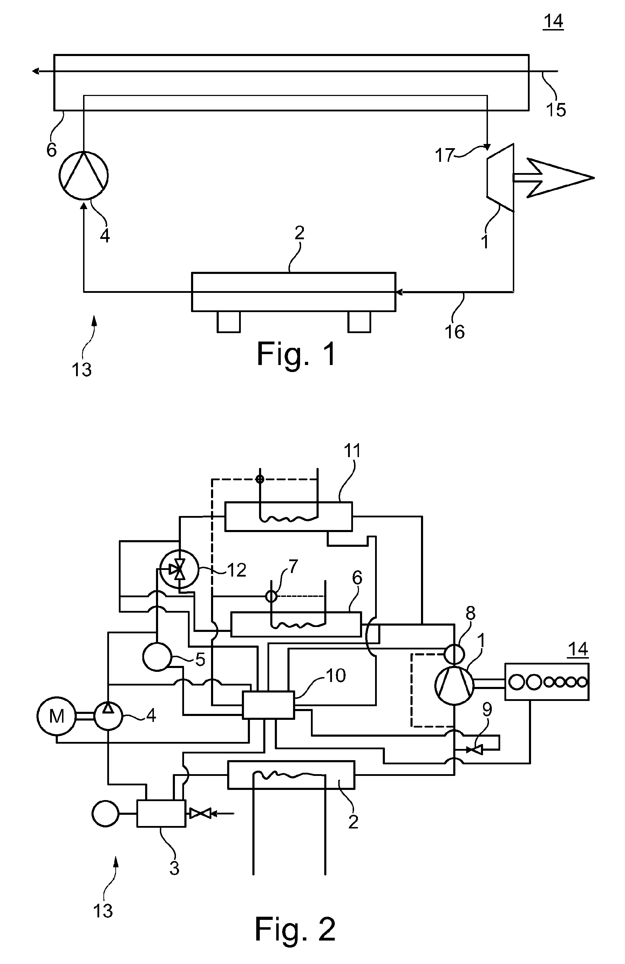

Figur 1 illustriert den grundlegenden Aufbau eines Wärmerückgewinnungssystems 13, wie es im Rahmen eines gattungsgemäßen Verbrennungsmotors 14 eingesetzt werden kann. Als Wärmerückgewinnung (WRG, WHR) ist dabei grundsätzlich jegliches Verfahren zur Wiedernutzbarmachung der thermischen Energie eines durch den Verbrennungsprozess erzeugten Massenstromes zu verstehen. Im vorliegenden Beispielszenario dient als Wärmelieferant dabei eine von erhitzten Verbrennungsabgasen durchströmte Abgasanlage 15 des Verbrennungsmotors.

Zur Übertragung der von der Abgasanlage 15 transportierten thermischen Energie dient der rekuperative Wärmeübertrager 6, welcher den Abgasstrom - durch eine wärmedurchlässige Wand getrennt - an einem Wärmeträger vorbeiführt. Die Strömungsrichtung 17 des Wärmeträgers kann dabei dem Abgasstrom im Wesentlichen entgegen gerichtet sein, sodass die getrennten Stoffströme innerhalb des Wärmeübertragers 6 Gegenströme im Sinne der Wärmetechnik bilden, die eine Angleichung der Temperatur des Wärmeträgers an jene der Abgasanlage 15 erlauben.

Zwecks Führung des Wärmeträgers innerhalb des Wärmerückgewinnungssystems 13 ist dabei ein zu einem Wärmekreislauf geschlossenes Leitungssystem 16 vorgesehen, in welchem der Wärmeträger im Betrieb des Wärmerückgewinnungssystems 13 einen thermodynamischen Kreisprozess durchläuft. Der als Arbeitsmedium fungierende fluidische Wärmeträger vollzieht in diesem Prozess eine periodische Folge von Zustandsänderungen, die in dieser Darstellung von der Erwärmung mittels des Wärmeübertragers 6 eingeleitet werden. Derart erwärmt durchströmt der Wärmeträger in der vom Leitungssystem 16 vorgegebenen Strömungsrichtung 17 eine Wärmekraftmaschine 1, welche die vom Wärmeträger transportierte Wärmeenergie in Bewegungsenergie umwandelt und so als mechanische Arbeit nutzbar macht. Die Wärmekraftmaschine 1 besitzt vorliegend die Gestalt einer Expansionsmaschine, die durch den typischerweise dampfförmig den Wärmeübertrager 6 verlassenden Wärmeträger angetrieben wird. Eine solche Wärmekraftmaschine 1 bedient sich der vom Dampfdruck des Wärmeträgers verkörperten thermodynamischen Energie, indem sie die bei der Ausdehnung des dampfförmigen Wärmeträgers von diesem ausgeübte Expansivkraft auf einen Abtrieb überträgt.

Der mit verringertem Dampfdruck aus der Wärmekraftmaschine 1 austretende Wärmeträger wird nunmehr durch das Leitungssystem 16 in der Strömungsrichtung 17 einem Kondensator 2 zugeführt, welcher den Abdampf der Wärmekraftmaschine 1 erneut verflüssigt. Durch die Rückführung des Wärmeträgers von seinem gasförmigen in den flüssigen Aggregatzustand schließt der Kondensator 2 somit gleichsam den beschriebenen thermodynamischen Kreis des Wärmerückgewinnungssystems 13. Um diesen Kreisprozess aufrechtzuerhalten, ist an geeigneter Position - vorliegend zwischen dem Kondensator 2 und dem von diesem gespeisten Wärmeübertrager 6 - eine Verdrängerpumpe 4 in das Leitungssystem 16 eingebunden, welche den Wärmeträger in der Strömungsrichtung 17 umwälzt.

Figur 2 verdeutlicht den erfindungsgemäßen Ansatz anhand eines detaillierteren Schaltplans. Als solcher berücksichtigt der Schaltplan gemäß Figur 2 nicht notwendigerweise die reale Gestalt und Anordnung einzelner Systemkomponenten des gezeigten Wärmerückgewinnungssystems 13, sondern ist vielmehr als eine abstrahierte Darstellung von dessen Funktionen mithilfe einzelner Symbole für die einzelnen Bauelemente und deren elektrische und fluidische Verbindungen zu sehen.

Die - in Form der oben beschriebenen Expansionsmaschine ausgeführte - Wärmekraftmaschine 1 des Wärmerückgewinnungssystems 13 weist dabei eine fluiddichte Wandung auf, welche ihren Abtrieb gegenüber dem Wärmeträger hermetisiert. Zum Übertragen der am Abtrieb zu verrichtenden Abtriebsarbeit durch diese Wandung hindurch dient eine Magnetkupplung, deren Wirkprinzip auf der Erzeugung eines Magnetfelds zwischen zwei berührungslos auf gegenüberliegenden Seiten der Wandung angeordneten Kupplungspartnern fußt. Dabei kommen hinsichtlich beider Kupplungspartner verschiedenste Kombinationen von Dauer- oder Elektromagneten in Betracht, sofern ihre wechselseitige Krafttransmission keinen Durchbruch der Wandung zur Durchführung einer Antriebswelle erfordert. Einer der Kupplungspartner kann dabei insbesondere das Drehfeld des Stators eines Elektromotors, Generators, Hydromotors oder einer Pumpe sein. Diese Anordnungen werden zwar teilweise nicht als Magnetkupplung im engeren Sinn verstanden, arbeiten jedoch nach dem gleichen Prinzip und seien im Rahmen der folgenden Ausführungen vom Begriff der Magnetkupplung ausdrücklich mit erfasst.

Mit nunmehr verringertem Dampfdruck erreicht der Abdampf der Wärmekraftmaschine 1 einen Kondensator 2, der ihn im physikalischen Sinne kondensiert, also vom gasförmigen in den flüssigen Aggregatzustand überführt. Entsprechend EN 378 Teil 1 wird eine entsprechende Komponente des Wärmekreislaufs auch als Verflüssiger bezeichnet, um eine sprachliche Abgrenzung zum elektrischen Kondensator zu schaffen. Das Wirkprinzip des Kondensators 2 unterscheidet sich dabei nicht wesentlich von jenem konventioneller Wärmerückgewinnungssysteme und wird daher im vorliegenden Kontext nicht näher beleuchtet.

Dem Kondensator 2 ist ein erfindungsgemäßer Ausgleichsbehälter 3 nachgeordnet, welcher den Wärmeträger zur Umwelt mittels einer stoffundurchlässigen Wand abdichtet. Eine vorzugsweise in diese Wand integrierte, ebenfalls impermeable Membran des Ausgleichsbehälters 3 gestattet dabei gegebenenfalls einen Ausgleich des durch den variablen Massenstrom des Wärmeträgers verursachten Überdrucks. Mittels eines eigens vorgesehenen Füllventils kann der Wärmeträger dem Ausgleichsbehälter - etwa im Rahmen der Inbetriebnahme oder Wartung des Verbrennungsmotors 14 - zugeführt oder entnommen werden.

Zur Förderung des Wärmeträgers dient dabei eine als FaltenbalgMembranpumpe ausgeführte Verdrängerpumpe 4, dessen metallische Faltenbalge mittels in Schmieröl gelagerter Hubkolben periodisch entfaltet und zusammengefaltet werden. Angesichts des hydromechanischen Antriebs der als Stellelement dienenden Hubkolben fungiert das Schmieröl dabei gleichsam als Hydraulikflüssigkeit.

Von der Verdrängerpumpe 4 wird der Wärmeträger einem federbelasteten Speicher 5 zugeführt, der mittels seiner fluiddichten Wandung ebenfalls ein Austreten des Wärmeträgers verhindert. Der - zum Betrieb eines erfindungsgemäßen Wärmerückgewinnungssystems 13 nicht zwingend erforderliche - Speicher 5 dient dabei zur Speicherung hydraulischer Energie, um Phasen erhöhter Belastung durch eine intensivere Wärmerückgewinnung abdecken und das Leitungssystem 16 durchlaufende Druckimpulse abmindern zu können.

Der aus dem Speicher 5 geförderte Wärmeträger speist sodann einen Wärmeübertrager 6 in Form eines Verdampfers, welcher den überwiegend flüssigen Wärmeträger unter Zuführung der von den Verbrennungsabgasen abgestrahlten thermischen Energie in seinen dampfförmigen Zustand überführt. Der Wärmeübertrager 6 umfasst hierzu eine Oberfläche, durch die Wärme von der Abgasanlage 15 auf den zu verdampfenden Wärmeträger übertragen wird. Ein optional vorgesehener weiterer Wärmeübertrager 11 wendet das beschriebene Wirkprinzip analog auf eine Rückführleitung der Abgasanlage 15 des Verbrennungsmotors 14 an.

Ein stromaufwärts des Wärmeübertragers 6 angeordnetes AbgasUmgehungsventil 7 gestattet dabei eine fallweise Umleitung des Abgases in Anbetracht variabler Lastanforderungen. Das in entsprechender Weise der Wärmekraftmaschine 1 vorgelagerte weitere Umgehungsventil 8 ermöglicht analog das zeitweise Aussetzen der Wärmerückgewinnung unter Aufrechterhaltung eines den Wärmeträger umwälzenden Schiebebetriebs des Wärmerückgewinnungssystems 13. Schließlich erlaubt ein in Strömungsrichtung 17 des Wärmeträgers zwischen der Wärmekraftmaschine 1 und dem Kondensator 2 in das Leitungssystem 16 eingebettetes Sicherheitsventil 9 ein gezieltes Öffnen des Wärmerückgewinnungssystems 13 zur Gewährleistung seiner Betriebssicherheit im Überlastungsfall.

Zwecks Steuerung und Kontrolle unterschiedlichster Funktionen des Wärmerückgewinnungssystems 13 umfasst dieses ein in Figur 2 zentral dargestelltes Steuergerät 10. Dieses ist zur Eingabe entsprechender physikalischer Messgrößen mittels geeigneter Signalleitungen mit einer Vielzahl von Messwertaufnehmern verbunden. Hierzu zählen ein zwischen dem Wärmeübertrager 6 und der Wärmekraftmaschine 1 angeordneter erster sowie ein mit dem weiteren Wärmeübertrager 11 verbundener zweiter Temperaturfühler ebenso wie dem Ausgleichsbehälter 3 und dem Speicher 5 zugeordnete sowie stromauf- und -abwärts eines zur Regelung des Massestroms dienenden Regelventils 12 vorgesehene Druckaufnehmer. Die erfassten Messwerte zieht das Steuergerät 10 zur Betätigen der Ventile 7, 8, 9 sowie zur Leistungsregelung der Pumpe 4 sowie eines mit dem Abtrieb verbundenen Generators heran.

## Patentansprüche

1. Wärmerückgewinnungssystem (13) für einen Verbrennungsmotor (14) mit
- einem von einem fluidischen Wärmeträger durchströmten Wärmeübertrager (6, 11) zum Übertragen von Wärme von einer Abgasanlage (15) des Verbrennungsmotors (14) auf den Wärmeträger,
- einer von dem Wärmeträger durchströmten Wärmekraftmaschine (1), insbesondere einer Expansionsmaschine, zum Umwandeln der auf den Wärmeträger übertragenen Wärme in eine mechanische Abtriebsarbeit,
- einem im Wesentlichen zyklisch geschlossenen Leitungssystem (16) zum Verbinden des Wärmeübertragers (6, 11) mit der Wärmekraftmaschine (1) und
- einer Verdrängerpumpe (4) zum Fördern des Wärmeträgers durch das Leitungssystem (16) in einer vorgegebenen Strömungsrichtung (17) mittels einer mechanischen Antriebsarbeit,
**gekennzeichnet durch**
- einen gegenüber dem Wärmeträger hermetisierten Antrieb zum Zuführen der Antriebsarbeit an die Verdrängerpumpe (4) und
- einen gegenüber dem Wärmeträger hermetisierten Abtrieb zum Abführen der Abtriebsarbeit von der Wärmekraftmaschine (1).

2. Wärmerückgewinnungssystem (13) nach Anspruch 1,
**dadurch gekennzeichnet,**
**dass** die Verdrängerpumpe (4) eine fluiddichte Trennmembran aufweist, welche den Antrieb gegenüber dem Wärmeträger hermetisiert.

3. Wärmerückgewinnungssystem (13) nach Anspruch 2,
**dadurch gekennzeichnet,**
**dass** die Trennmembran ein Metall enthält.

4. Wärmerückgewinnungssystem (13) nach Anspruch 2 oder 3,
**dadurch gekennzeichnet,**
**dass** die Trennmembran ein Polymer, insbesondere Polytetrafluorethylen, enthält.

5. Wärmerückgewinnungssystem (13) nach einem der Ansprüche 2 bis 4, **dadurch gekennzeichnet,**
**dass** die Trennmembran beschichtet ist.

6. Wärmerückgewinnungssystem (13) nach einem der Ansprüche 2 bis 5,
**gekennzeichnet durch**
im Wesentlichen stapelförmig mit der Trennmembran zu einem Faltenbalg verbundene weitere Trennmembranen.

7. Wärmerückgewinnungssystem (13) nach Anspruch 6,
**dadurch gekennzeichnet,**
**dass** der Antrieb eine den Faltenbalg im Wesentlichen ausfüllende Hydraulikflüssigkeit, insbesondere ein Schmieröl, und einen in der Hydraulikflüssigkeit beweglich gelagerten Hubkolben umfasst, sodass eine Hubbewegung des Hubkolbens den Faltenbalg mittels der Hydraulikflüssigkeit hydromechanisch entfaltet.

8. Wärmerückgewinnungssystem (13) nach einem der Ansprüche 1 bis 7, **dadurch gekennzeichnet,**
**dass** die Wärmekraftmaschine (1) eine fluiddichte Wandung aufweist, welche den Abtrieb gegenüber dem Wärmeträger hermetisiert.

9. Wärmerückgewinnungssystem (13) nach Anspruch 8,
**gekennzeichnet durch**
eine zwischen der Wärmekraftmaschine (1) und dem Abtrieb angeordnete berührungslose Magnetkupplung zum Übertragen der Abtriebsarbeit **durch** die Wandung.

10. Wärmerückgewinnungssystem (13) nach einem der Ansprüche 1 bis 9,
**gekennzeichnet durch**
einen mit dem Leitungssystem (16) in Fluidverbindung stehenden Ausgleichsbehälter (3) zum Ausgleichen eines Drucks des Wärmeträgers.

11. Wärmerückgewinnungssystem (13) nach Anspruch 10,
**dadurch gekennzeichnet,**
**dass** der Ausgleichsbehälter (3) ein Füllventil zum Füllen des Leitungssystems (16) mit dem Wärmeträger aufweist.

12. Wärmerückgewinnungssystem (13) nach Anspruch 11,
**gekennzeichnet durch**
einen mit dem Füllventil verbundenen Druckaufnehmer zum Aufnehmen des Drucks.

13. Wärmerückgewinnungssystem (13) nach einem der Ansprüche 1 bis 12, **gekennzeichnet durch**
ein in das Leitungssystem (16) eingebettetes, in Strömungsrichtung (17) stromaufwärts der Wärmekraftmaschine (1) angeordnetes Umgehungsventil (8) zum Umleiten des Wärmeträgers um die Wärmekraftmaschine (1).

14. Wärmerückgewinnungssystem (13) nach einem der Ansprüche 1 bis 13, **gekennzeichnet durch**
ein mit der Verdrängerpumpe (4) in Signalverbindung stehendes Steuergerät zum Steuern der Verdrängerpumpe (4).

15. Verbrennungsmotor (14) mit
- einem Brennraum zum Verbrennen eines Kraftstoffs und
- einer mit dem Brennraum in Fluidverbindung stehenden Abgasanlage (15) zum Abführen eines Verbrennungsabgases aus dem Brennraum, **gekennzeichnet durch**
- ein mit der Abgasanlage (15) in thermischer Verbindung stehendes Wärmerückgewinnungssystem (13) nach einem der Ansprüche 1 bis 14.
